Europäisches Patentamt

European Patent Office

Office européen des brevets

(19)

(11) EP 0 488 458 B1

## (12) FASCICULE DE BREVET EUROPEEN

(45) Date de publication et mention
de la délivrance du brevet:
**08.10.1997 Bulletin 1997/41**

(51) Int Cl.$^6$: **G06T 7/20**

(21) Numéro de dépôt: **91203057.4**

(22) Date de dépôt: **22.11.1991**

(54) **Procédé de réalisation d'un filtre de mouvement pour cibles lentes**

Verfahren zur Herstellung eines Bewegungsfilters für langsame Ziele

Motion filter realisation process for slow targets

(84) Etats contractants désignés:
**DE FR GB**

(30) Priorité: **30.11.1990 FR 9015026**

(43) Date de publication de la demande:
**03.06.1992 Bulletin 1992/23**

(73) Titulaires:
- **LABORATOIRES D'ELECTRONIQUE PHILIPS S.A.S.**
  **94450 Limeil-Brévannes (FR)**
  Etats contractants désignés:
  **FR**
- **Philips Electronics N.V.**
  **5621 BA Eindhoven (NL)**
  Etats contractants désignés:
  **DE GB**

(72) Inventeur: **Florent, Raoul, Société Civile S.P.I.D.**
**F-75008 Paris (FR)**

(74) Mandataire: **Landousy, Christian et al**
**Société Civile S.P.I.D.**
**156, Boulevard Haussmann**
**75008 Paris (FR)**

(56) Documents cités:
- PATTERN RECOGNITION. vol. 22, no. 3, 1989, ELMSFORD US pages 247 - 256; V.S.S. HWANG: 'Tracking feature points in time-varying images using an opportunistic selection approach'
- IEEE TRANSACTIONS ON PATTERN ANALYSIS AND MACHINE INTELLIGENCE vol. 9, no. 1, Janvier 1987, NEW YORK US pages 56 - 73; I.K.SETHI ET AL.: 'Finding trajectories of feature points in a monocular image sequence'

## Description

L'invention concerne un procédé de réalisation d'un filtre de mouvement pour la construction de trajectoires de cibles ponctuelles en mouvement lent appareillées dans une séquence d'images binaires recalées, incluant l'extraction de données constituant une première histoire formée des coordonnées des têtes de trajectoires déjà construites et des coordonnées de cibles potentiellement appareillables à des trajectoires, appelées alarmes.

L'invention trouve son application par exemple dans la surveillance du trafic routier.

Une méthode de filtrage de mouvement est déjà connue de la publication intitulée "Tracking Feature Points in Time-Varying Images Using an Opportunistic Selection Approach" par Vincent S.S. HWANG, dans "PATTERN RECOGNITION, Vol.22, N°3, pp.247-256, 1989". Cette méthode, appliquée à une séquence d'images représentant des objets en mouvement, a pour objet de prolonger des trajectoires dont les données sont connues dans une image d'ordre k-1, en s'appuyant sur des points caractéristiques P observés dans l'image ultérieure d'ordre k.

A cet effet, dans l'image courante d'ordre k, pour chaque tête de trajectoire, un point caractéristique prédit est calculé à partir de la vitesse et de l'accélération des points de la trajectoire connus des images précédentes. Puis, en partant du point prédit, on calcule les points caractéristiques qui sont proches du point prédit, c'est-à-dire dans un voisinage de rayon D. La méthode est entièrement fondée sur l'hypothèse que les trajectoires des points caractéristiques P sont lisses.

Trois cas peuvent alors se présenter :

1) Il existe plusieurs points caractéristiques P dans le voisinage D du point prédit = on calcule des prolongations plausibles entre ladite tête de trajectoire et lesdits points caractéristiques, et on affecte l'age 0 (zéro) à ces trajectoires plausibles ;

2) Il n'existe pas de points caractéristiques P dans ce voisinage du point prédit : on prolonge la trajectoire en s'appuyant sur le point prédit, ce qui donne une trajectoire prédite dont l'âge est augmenté de 1.

3) Il existe des points caractéristiques qui ne sont dans le voisinage d'aucun point prédit : on initie une nouvelle trajectoire sur chacun de ces points, affectée de l'âge zéro.

Dans le premier cas, le nombre des trajectoires plausibles pour un point caractéristique donné peut être grand : les trajectoires plausibles doivent être sélectionnées par une "fonction de lissé" qui élimine les trajectoires aberrantes et qui est une fonction pondérée de la vitesse et de la direction du vecteur vitesse en un point caractéristiques donné. Ainsi, tout au plus 4 trajectoires plausibles répondant aux meilleurs critères de lissés sont gardées pour chacune point caractéristique.

Dans le second cas, où on a étendu la trajectoire en s'appuyant sur un point caractéristique dont on a créé l'existence par une hypothèse de prédiction, il est nécessaire de limiter le nombre de fois (MAXAGE) où l'on va réaliser cette opération de prolongement de trajectoire purement prédictif, de manière consécutive en réalisant une incrémentation d'une unité de l'âge de la trajectoire à chaque telle opération, afin d'éviter une explosion combinatoire des trajectoires et des solutions incorrectes (MAXAGE = 3).

Parmi les trajectoires plausibles conservées, la trajectoire sélectionnée est celle qui présente la plus faible "mesure de lissé", qui présente la plus faible entropie et qui présente un âge 0 (zéro).

Une méthode de filtrage de mouvement est aussi connue de la publication intitulée "Finding trajectories of Feature Points in a Monocular Image Sequence" par Ishaware K. BETHI et alii, dans "IEEE Transactions on Pattern Analysis and Machine Intelligence, Vol. PAMI.9, N°1, Jan.1987, p.56-73". Cette publication décrit une méthode itérative pour trouver les trajectoires de points dans une séquence d'image. Cette méthode est aussi fondée sur le fait que le mouvement d'un objet ne peut pas changer brusquement. L'objet est assimilé à un point, et la trajectoire des points est recherchée. La séquence d'images peut contenir plusieurs objets en mouvement, donc plusieurs trajectoires peuvent être tracées. Une trajectoire étant composée de points ayant des coordonnées données dans l'image, une déviation d'un point par rapport à un tracé de trajectoire dans une image d'ordre k, est une mesure d'une "fonction de cohérence de tracé" de ladite trajectoire qui prend en compte la vitesse et la direction des points mobiles. L'algorithme divulgué converge après quatre itérations. A chaque itération, des corrections sont apportées pour lisser de plus en plus les trajectoires déterminées. L'algorithme comprend une initialisation où les plus proches voisins sont déterminés et où autant de trajectoires sont initialisées. Pour chaque trajectoire, la déviation doit être minimale, et la somme des déviations pour les trajectoires doit être minimale. Des étapes d'itération avant et arrière sont alors menées à bien pour échanger des points sur des trajectoires de manière à respecter le concept de cohérence des tracés. Les trajectoires sélectionnées sont celles qui satisfont au critère défini par la fonction de cohérence. Ainsi les erreurs dues aux intersections de trajectoires peuvent être corrigées. Lorsque des voisins ne peuvent être trouvés, les trajectoires sont prolongées par prédiction.

Il est déjà connu de l'état de la technique un procédé de filtrage, dit de Kalman, fondé sur la prédiction des trajectoires. Mais dans son utilisation courante le procédé de Kalman est très complexe, car il génère un grand nombre de pistes pour essayer d'assembler chaque trajectoire à chacune des nouvelles alarmes qui apparaissent. Il est donc très coûteux en temps de calcul et en mémoire. Par contre, il peut s'adresser à des cibles en mouvement rapide, ou extrêmement rapide, c'est-à-dire supposant un déplacement supérieur à 10 pixels entre deux images successives.

Un des buts de l'invention est de fournir un procédé applicable à la détection des cibles lentes, et qui donne des résultats d'autant meilleurs que les cibles sont plus lentes.

Un autre but de l'invention est de fournir un tel procédé qui soit peu coûteux en temps de calcul et peu coûteux en mémoire, c'est-à-dire un procédé facile et peut coûteux à implémenter.

Un objet particulier de l'invention est de détecter des trajectoires cohérentes de mobiles ayant des vitesses différentes et pouvant réaliser des demi-tours.

Un autre objet particulier de l'invention est de traiter de façon simple les intersections de trajectoires.

Or la détection des cibles lentes présente un certain nombre de problèmes que l'invention se propose de résoudre pour atteindre ses buts.

On notera que la détection de mouvement dans une séquence d'images implique d'abord une différence entre deux images consécutives, de manière à faire apparaître les parties mobiles et les parties fixes. Mais cette différence, dite différence du premier ordre, ne fournit pas suffisamment d'éléments pour réaliser la détection de cibles ponctuelles dans une séquence d'images, lorsque ces cibles sont animées d'un mouvement lent.

En effet, en premier lieu, les images sont bruitées, c'est-à-dire que l'on trouve, dans l'image de différence, des contributions dues au bruit, qui peuvent donner l'impression d'objets mobiles ou de cibles.

En second lieu, les images doivent être recalées. Cela est nécessaire du fait que, en général, la caméra qui fait l'acquisition des images à traiter n'est pas stable. Elle est elle-même mobile, soit parce qu'elle est montée sur un véhicule en mouvement, soit parce qu'elle est montée sur un pylône qui oscille dans le vent, par exemple. Les images acquises sont donc recalées les unes vis-à-vis des autres de manière à ce que le fond, par exemple, apparaisse fixe dans la séquence d'images. Le recalage est effectué par un procédé connu en soi, qui ne fait donc pas partie de l'invention. Mais il apparaît que le procédé de recalage n'est jamais parfait. Il conduit en général à des erreurs de recalage de l'ordre du pixel, ce qui signifie qu'entre deux images consécutives, il apparaît des erreurs systématiques de l'ordre du pixel sur la coïncidence des parties correspondantes des images. IL en résulte que, dans l'image de différence, on trouve la contribution de ces erreurs de recalage, que l'on peut prendre également pour des objets mobiles. D'autre part, dans le procédé de recalage, il peut apparaître en outre des erreurs occasionnelles importantes s'étalant sur une proportion non négligeable d'images successives dans la séquence d'images. La contribution de ces erreurs occasionnelles dues au procédé de recalage sont aussi une source d'erreurs dans la détection de cibles en mouvement lent.

En troisième lieu, parmi les objets qui peuvent apparaître sur les images, on trouve un certain nombre de cibles que l'on ne veut pas détecter. Ce sont par exemple des arbres ou des nuages en mouvement, ou encore des parties du fond soumises à des variations de l'éclairage. Au contraire, un des buts de l'invention est la détection de mobiles, ayant des trajectoires relativement continues et relativement régulières.

Ces problèmes sont résolus et les différents buts de l'invention sont atteints, au moyen d'un procédé tel que défini dans le préambule et caractérisé en ce qu'il comprend des étapes de :

I) initialisation, incluant les définitions d'un voisinage de rayon au moins égal au déplacement maximal des cibles entre deux instants, centré sur chaque alarme et d'un critère de confiance basé sur des mesures de distances parcourues par les cibles indépendamment de leur vitesse, avec un minimum admissible appelé seuil de confiance,
II) construction d'une seconde histoire à un second instant, incluant la détermination de têtes de trajectoire appelées voisins, et de têtes de trajectoires isolées, qui sont respectivement dans un, et hors de tout, voisinage d'alarme, et la mise en oeuvre de deux boucles avec :

II.a) dans une première boucle, la copie directe des alarmes dans la seconde histoire, et la détection desdites copies directes comme nouvelles têtes de trajectoire, soit avec appareillement à un voisin s'il s'en trouve dans le voisinage de l'alarme et prolongation de la trajectoire correspondante lorsque le critère de confiance appliqué à ladite copie directe appareillée est satisfait, soit avec initialisation d'une trajectoire à partir d'une copie directe sans voisin,
II.b) dans une seconde boucle, la copie directe de têtes de trajectoire isolées et la détection desdites copies directes comme nouvelles têtes de trajectoires avec maintien d'une trajectoire lorsque le critère de confiance appliqué à ladite copie directe correspondante est satisfait.

Dans ces conditions, le procédé selon l'invention peut être facilement implémenté par des fonctions simples dans des mémoires. Il consomme peu de temps de calcul et peu de mémoire, et la détection est de très bonne qualité, notamment :

- le taux des fausses alarmes ne dépasse pas 1 fausse alarme toutes les 20 mn,
- le taux de détection des cibles considérées comme intéressantes et de l'ordre de 100 %.

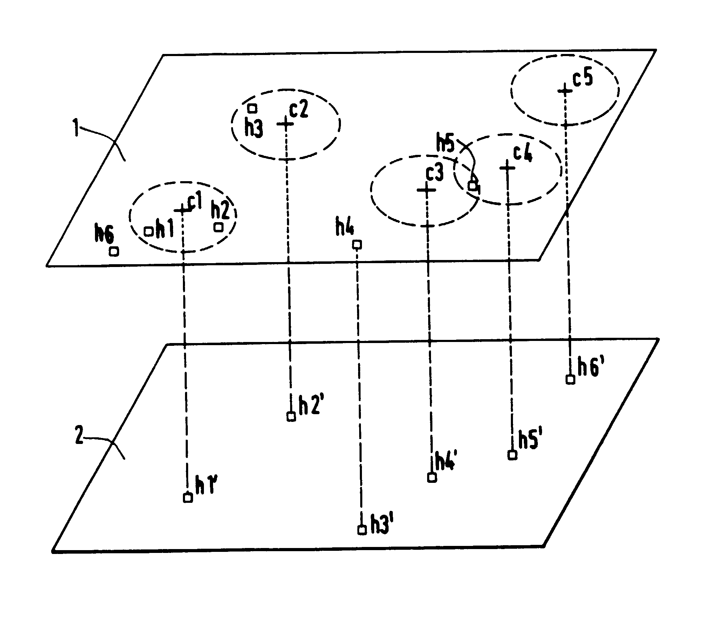

L'invention est décrite ci-après en détail, en référence avec la figure 1 annexée,

laquelle figure 1 représente la mise à jour des coordonnées à l'ordre n, à partir des coordonnées à l'ordre (n-1).

Le procédé selon l'invention a pour but principal la réalisation d'un filtre de mouvement pour la détection de cibles ponctuelles en mouvement lent dans une séquence d'images.

Dans le contexte de travail décrit précédemment, et au vu des objectifs de la présente invention, on réalise en premier lieu une différence entre chaque image consécutive de la séquence ; mais on ne se limite pas à l'exploitation de cette simple différence d'images pour réaliser la détection.

Dans le procédé selon l'invention, on travaille sur des coordonnées des centres de gravité des zones engendrées dans l'image de différence, c'est-à-dire provenant de la différence à l'ordre premier entre deux images consécutives recalées.

Un extracteur connu en soi et non décrit ici, est utilisé pour fournir ces coordonnées.

Le but principal de l'invention se ramène alors à exploiter l'ensemble de ces coordonnées, puis à bâtir des trajectoires, et enfin à réaliser des mesures permettant d'estimer si ces trajectoires correspondent à des trajectoires de mobiles classiques, de véhicules par exemple, se déplaçant dans une scène, ou bien si ces trajectoires correspondent vraisemblablement à des fausses alarmes.

Par véhicule se déplaçant de façon classique, il faut entendre un véhicule ayant une certaine inertie, une trajectoire raisonnablement lisse, continue et régulière. On cherchera à éliminer les trajectoires d'objets mobiles tels que les arbres, les nuages, les drapeaux. Ces objets présentent des trajectoires un peu incohérentes ou erratiques ou bien oscillantes, ou totalement erratiques.

Or, on se trouve dans le cas où les coordonnées des zones extraites dans les images de différence sont fournies avec une précision de plusieurs pixels, ce qui est souvent l'ordre de grandeur du déplacement des cibles, du fait que l'on s'est fixé pour but de fournir un procédé qui s'applique aux cibles lentes, c'est-à-dire animées de mouvements qui ne dépassent pas 10 pixels entre deux images successives.

Par fausse alarme, il faut donc entendre les alarmes provoquées par les contributions du bruit, des erreurs de recalage et des mouvements parasites.

D'autre part, dans la détection de cibles, il apparaît encore un cas difficile qui est celui des intersections de trajectoires. On considère qu'à l'instant n-1 d'une séquence d'images, l'état du procédé, ou algorithme, correspond à une histoire notée "Hist(n-1)" qui est formée de l'ensemble des trajectoires et de leurs caractéristiques. Dans le cas d'une intersection, on possède dans Hist(n-1), deux trajectoires ou plus, ayant des têtes de trajectoire repérées par un élément hj, disposées à proximité d'une alarme Ci arrivant aussi dans Hist(n-1). Le problème de la construction des trajectoires s'appuyant sur la nouvelle alarme, n'a pas de solution évidente. Selon l'invention, par soucis de présenter un procédé (ou algorithme) rapide et nécessitant peu de mémorisation, on résout le problème de l'appareillement en s'assurant d'abord de la validité des trajectoires par une mesure d'activité. Dans le cas où au moins deux trajectoires sont valides, on décrète l'intersection et on met en route un compteur de compte à rebours associé à l'alarme. A partir du point d'intersection on recommence à évaluer les trajectoires en oubliant le passé. D'autre part dans la dernière étape du procédé, ou étape de détection, les alarmes dont le compteur sera allumé seront sélectionnées indépendamment des mesures de confiance.

Ce procédé permet à la fois d'éviter la multiplication du nombre de trajectoires potentielles, c'est-à-dire l'explosion combinatoire propre aux utilisations classiques du filtrage de Kalman déjà cité, et d'éviter les faux appareillements.

En effet, si une fausse alarme se trouve près d'une trajectoire valide, l'allumage du compteur n'est pas généré, du fait que cette fausse alarme n'a pas de passé. Cette situation ne correspondra pas effectivement à une intersection.

On rappelle que l'on s'est fixé pour but de fournir un procédé peu gourmand en temps de calcul et en capacité mémoire. Par conséquent, lorsque des alarmes ne pourront pas être associées à des trajectoires pendant un certain temps, on les éliminera de l'histoire.

La mesure qui sera utilisée finalement pour réaliser la sélection entre les fausses et les vraies alarme devra être une mesure robuste. Ceci à cause de tout ce qui a été dit précédemment sur l'imprécision des centres de gravité, sur les erreurs de recalage et sur le fait que l'on désire détecter des petits mouvements. Aussi, pour réaliser une détection de bonne qualité, dans les conditions imposées, on intégrera l'information relative à un mouvement sur plusieurs images, typiquement 5 à 10 images. En effet, on considère que l'on ne peut prendre la décision de bonne détection qu'après avoir repéré les trajectoires cohérentes, lisses et continues, pendant un tel nombre d'images. Pour repérer les trajectoires cohérentes, on établit une opération de seuillage sur l'histoire à l'ordre n, afin de déterminer pour chaque alarme à l'ordre n, s'il s'agit d'une alarme reliée à une trajectoire d'objet à détecter ou d'une trajectoire de fausse alarme.

Pour mettre en oeuvre le procédé selon l'invention, on définit d'abord les éléments, puis on définit les fonctions employées. Parmi ces définitions, on trouve :

a) tel qu'illustré schématiquement par la figure 1, sur une image d'ordre (n-1), notée Hist(n-1) et référencée 1, des éléments $h_1$, $h_2$, $h_3$... $h_i$, qui sont des éléments du plan R x R ; chaque point $h_j$ est la position physique qui correspond à la tête d'une trajectoire j à l'instant n-1 ;

b) une mesure d'activité A(h) qui intègre le nombre de fois où l'élément h a été appareillé à une trajectoire ; c'est l'activité du point h ;

c) une mesure de confiance M(h) considérée par rapport aux fausses alarmes ou aux cibles, pour h appartenant à Hist(n-1), h' étant son correspondant dans Hist(n), Hist(n) étant référencé 2 sur la figure 1 ;

d) un compteur de compte à rebours T(h) qui est enclenché quand une intersection est détectée ;

e) une distance mathématique d pour des points $h_1$ et $h_2$ dans R x R que l'on écrit

$$d(h_1, h_2) ;$$

f) pour la mesure d'activité A(h), deux fonctions auxiliaires :

- une fonction More [A(h)] qui rend l'élément h plus actif ;
- une fonction Less [A(h)] qui rend l'élément h moins actif ;

Ces deux fonctions More, et Less, sont des fonctions de mise à jour, qui permettent la mise à jour de la mesure d'activité A, à chaque étape : si, par la mesure d'activité, on parvient à la conclusion qu'un élément n'a pas été associé à des trajectoires pendant un certain temps, on l'éliminera de l'histoire ;

g) pour la mesure de confiance M(h), pour h appartenant à Hist(n-1) et h' son correspondant dans hist(n), la fonction de mise à jour M(h) qui est une fonction de deux variables R telles que :

$$M(h') = R[M(h), h\ h']$$

relation dans laquelle
h h' est le vecteur reliant h à h'.

Cette relation exprime le fait que pour mettre à jour la confiance a l'ordre (n-1), c'est-à-dire pour calculer la confiance à l'ordre n, on utilise la confiance à l'ordre n-1 et l'innovation qui est représentée par le vecteur h h' correspondant au déplacement d'une alarme entre n-1 et n.

Ayant présenté les fonctions préalables, selon le procédé préconisé, on va calculer Hist n à partir à la fois de Hist (n-1) et des nouvelles alarmes arrivant à l'ordre n-1 notées ALARM. On écrit :

$$\text{Hist } n = \text{Hist}(n-1) + \text{ALARM}.$$

A la suite de quoi, on réalisera la détection.

Les fonctions présentées précédemment nécessitent encore la définition de paramètres qui sont :

START pour l'enclenchement ou départ du compteur d'intersection, ou compteur de compte à rebours ;
$d_0$ qui est un seuil de distance entre les alarmes Ci et les points hj,
$M_0$ seuil de confiance,
$A_0$ seuil de mort,

ces paramètres sont posés comme paramètres d'initialisation du procédé ou algorithme.

A/ Première étape du procédé ou algorithme :

$A_1$) Cette étape comprend l'accumulation des résultats provenant d'un extracteur. En sortie de l'extracteur, on trouve l'histoire à l'ordre n-1 notée Hist(n-1) référencée 1 sur la figure 1, qui est composée des coordonnées $h_1$, $h_2$, $h_3$..., hj des têtes de trajectoires, et on trouve les coordonnées C1, C2..., Ci des alarmes arrivant à l'ordre n-1, qui sont les coordonnées des centres de gravité des zones générées par l'image de différence, c'est-à-dire le centre d'un cercle de rayon $d_0$ dans lequel on cherche à appareiller les trajectoires et les alarmes. A partir de la confrontation de l'histoire à l'ordre n-1 et des alarmes arrivant à l'ordre n-1, on va bâtir l'histoire à l'ordre n.

$A_2$) Cette première étape comprend en outre la copie des coordonnées des nouvelles alarmes Ci dans l'histoire à bâtir Hist n. Il s'agit d'une copie informatique. On détermine les projections des alarmes Ci, et on les positionne dans l'histoire à bâtir Hist. n, référencée 2 sur la figure 1.

On notera hi' la projection de Ci dans Hist n. Par exemple, en référence avec la figure 1 :

h1' est la projection de C1 dans Hist n.

$A_3$) Cette première étape comprend également la recherche des voisins des alarmes Ci, ces voisins étant recherchés dans Hist(n-1). Dans cette sous-étape, on recherche les points de l'histoire à l'ordre n-1, qui se trouvent à une distance des alarmes Ci inférieure à la distance $d_0$ posée comme paramètre d'initialisation du procédé ou algorithme. Ce paramètre $d_0$ est fixé A PRIORI, et est de l'ordre du déplacement maximal des cibles traitées dans le présent procédé, c'est-à-dire 5 à 10 pixels entre deux images de la séquence d'images. On recherche donc les voisins hj compris dans des petits cercles de rayons $d_0$ et de centre chacun des Ci, tels que hj vérifie $d(Ci, hj) < d_0$

En référence avec la figure 1, à titre d'exemple plusieurs cas peuvent se présenter :

<u>Cas N°1</u> : il n'y a pas de voisins. C'est le cas de C5 sur la figure 1.

<u>Cas N°2</u> : il y a un seul voisin. C'est le cas de $h_3$ vis-à-vis de C2 sur la figure 1.

<u>Cas N°3</u> : il existe plusieurs voisins. C'est le cas de h1 et h2 vis-à-vis de C1 sur la figure 1.

<u>Cas N°4</u> : on trouve des coordonnées hj de tête de trajectoires qui ne sont pas à proximité d'une alarme Ci. C'est le cas de h4 sur la figure 1.

<u>Cas N°5</u> : on trouve une coordonnée hj de tête de trajectoire qui est à proximité de plusieurs alarmes, c'est le cas de h5 vis-à-vis de $C_3$ et $C_4$ sur la FIG.1.

<u>B/ Seconde étape du procédé ou algorithme.</u>

Cette seconde étape comprend deux boucles.

B1/ Dans la première boucle, on va traiter le cas N°1, N°2, N°3 et N°5 décrits précédemment, c'est-à-dire que l'on va :

- soit prolonger,
- soit initialiser

des trajectoires s'appuyant sur les alarmes reçues. En référence avec la figure 1 par exemple, on considère les points hj où des trajectoires se sont arrêtées à l'instant n-1, puis, s'il existe une alarme Ci à proximité de ce point, c'est-à-dire à une distance inférieure à $d_0$, on fait en sorte de relier le point hj et l'alarme Ci en question, afin de prolonger la trajectoire.

Si par contre on trouve une cible isolée Ci, c'est-à-dire dépourvue de trajectoire à proximité, alors on fait en sorte d'initialiser une trajectoire au départ de cette cible ou alarme.

Cette première boucle du procédé évolue en deux étapes B11 et B12, chaque étape comprenant trois sous-étapes traitant des cas N°1, N°2 et N°3.

B11/ Première étape de la première boucle.

B11a/ Cas N°1. Il n'y a pas de voisin autour d'une alarme. Dans cette étape on ne fait rien (cas C5 de la figure 1).

B11b/ Cas N°2. Il y a un seul voisin hj à proximité d'une alarme Ci (Cas C2, h3 de la figure 1). On réserve un registre de travail h, et on affecte à h ce voisin unique. On écrit h = hj, par exemple h = $h_3$.

B11c/ Cas N°3. Il y a plusieurs voisins à proximité d'une alarme Ci (cas C1 de la figure 1). Dans ce cas on affecte au registre h défini précédemment celui des voisins dont l'activité est la plus grande. Par exemple, dans la figure 1, on trouve $h_1$ et $h_2$ voisins de l'alarme C1. si on détermine que l'activité de $h_2$ est plus grande que l'activité de $h_1$ :

$$A(h_2) > A(h_1).$$

On affecte $h_2$ au registre de travail h, et on écrit :

$$h_2 = h.$$

Cependant, il faut considérer aussi l'activité des voisins les moins actifs, ici $h_1$, vis-à-vis du seuil d'activité $A_0$ défini comme un paramètre d'initialisation de l'algorithme.

Par exemple si à la fois $h_1$ et $h_2$ ont une activité supérieure au seuil d'activité $A_0$, alors on met en route le compteur T de compte à rebours, ce qui revient à dire que l'on a détecté une intersection.

On écrit $T(hi') = START$

où hi' est le correspondant de l'alarme Ci considérée, dans Hist n (voir l'étape A, $A_2$).

Dans l'exemple considéré : $T(h_1') = START$

Par contre si seulement un des voisins montre une activité supérieure au seuil $A_0$, alors on met le compteur de compte à rebours à 0, et on écrit :

$$T(hi') = 0$$

Dans l'exemple considéré, si seul $h_1$ a une activité supérieure à $A_0$, on écrit $T(h_1') = 0$.

B12/ Seconde étape de la première boucle.

Cette seconde étape consiste en une mise à jour des fonctions d'activité, de confiance et du compteur d'intersections.

B12a/ Cas N°1 (pas de voisin, exemple $C_5$)
On poursuit le procédé en mettant toutes les mesures à 0.

$$A\ (hi') = A_0$$

$$M\ (hi') = M_0$$

$$T\ (hi') = 0$$

On a ainsi repéré une nouvelle alarme (en anglais : new comer), qui n'est pas reliée à l'histoire à l'ordre n-1, et qui constitue une initialisation de trajectoire à l'ordre n.

B12b/ Cas N°2 (1 voisin, exemple $C_2$)
On a affaire à une trajectoire simple, non ambigüe. On augmente l'activité ; et on met à jour de la façon suivante :

$$A\ (hi') = More\ (A(h))$$

$$M\ (hi') = R[M(h),\ h\ hi']$$

$$T\ (hi') = T(h)\ -1$$

ce qui signifie que l'on décrémente le compteur d'intersection d'une unité.

B12c/ Cas N°3. On trouve encore ici les deux cas possibles envisagés précédemment.

Si le compteur ne vient pas de démarrer $T(hi') < START$, alors on est dans le cas d'une trajectoire unique à laquelle on peut faire confiance, et on fait la mise à jour comme dans la rubrique B12b.

Si le compteur vaut START, alors on a la détection d'une intersection. Dans ce cas on remet les mesures de confiance à leurs valeurs initiales.

$$M(hi') = M0.$$

B2/ Seconde boucle dans laquelle on traite le cas N°4 décrit à la rubrique A3/, et qui s'applique donc aux éléments hj de Hist(n-1) éloignés de toute alarme, c'est-à-dire qui vérifient :

$$d(Ci, hj) > d_0$$

Dans ce cas où on n'arrive pas à appareiller les éléments hj à une alarme, on procède comme suit :

B21/ Mise à jour de l'activité.

On révise l'activité de chaque élément hj à la baisse :

$$A(hj) = Less\ [A(hj)]$$

B21/ A l'issue de cette opération, deux cas peuvent apparaître : ou bien $A(hj)$ reste supérieur au seuil de mort, (cas de l'élément $h_4$ de la figure 1), alors on copie les coordonnées dans Hist n :

$$hi' : hj$$

par exemple $A(h_4)$ > seuil de mort, $h3' = h_4$ et on met à jour la mesure de confiance avec le vecteur O par la fonction R, exprimant que l'on n'a aucun déplacement :

$$M(hi') = R[M(hj),0]$$

ou bien $A(hj)$ est égal au seuil de mort, et dans ce cas l'élément est tué. Il n'a pas de correspondant dans Hist n.

C/ Détection sur Hist n.

On réalise la détection pour chaque élément hi' sur Hist n. A cet effet, on examine si la mesure de confiance est supérieure au seuil de détection, ou bien si le compteur est actif. Et dans ces deux cas, on sélectionne la trajectoire comme étant celle d'une cible potentielle. On exprime ainsi que si une trajectoire est assez fiable ou sûre, ou si une intersection a été détectée récemment, on sélectionne hi' comme cible potentielle. Ce qui s'écrit :

$$si\ M(hi') > seuil\ de\ détection$$

ou

$$Si\ T(hi') > 0$$

alors hi' est une cible potentielle. (Ex Cas N°5 de la FIG.1).

On a ainsi réussi avec le procédé décrit plus haut, soit à prolonger une trajectoire, soit à initialiser une trajectoire en s'appuyant sur une nouvelle alarme, et soit à prolonger une trajectoire soit à détruire une trajectoire ne s'appuyant pas sur une nouvelle alarme, tout en traitant d'une façon économique les cas d'intersections.

On trouvera en outre ci-après des remarques importantes relatives aux définitions des fonctions ou éléments utilisés dans ce procédé.

**DEFINITION DU VOISINAGE**

La distance d et le seuil $d_0$ définissent le voisinage des alarmes, c'est-à-dire le champ, ou la taille du champ dans lequel on peut rechercher des voisins des alarmes. La taille des voisinage doit être choisie en fonction des déplacements des cibles.

Un trop petit voisinage peut conduire à des absences de détection, ou à des pertes de trajectoire, alors qu'au contraire la définition d'un trop grand voisinage accroît la probabilité d'erreurs d'appareillement, ou les problèmes d'appareillement. Ainsi, si une cible n'est pas détectée pendant un certain nombre d'images, l'algorithme reste verrouillé sur la même trajectoire.

Donc il faut choisir $d_0$ comme un multiple du déplacement maximal entre 2 images. Par exemple si le déplacement maximal est de 2 pixel en 3 images, on choisit pour $d_0$ la valeur 6 pixels. Par soucis de simplicité on a choisi la "chess distance", distance du jeu d'échec, telle que si M(i,j) et N(x,y) sont deux points dans $R^2$ :

$$d(M,N) = Max(|i-x|, |j-y|)$$

Une très simple fonction d'adaptation du seuil de distance a été testée, par exemple pour les valeurs constantes :
    $d_1$, $d_2$ référence de confiance

$$f(x) = d_1 \text{ si } x < \text{référence de confiance}$$

$$= d_2 \text{ si autres cas } (d_1 < d_2)$$

Si on choisissait la distance euclydienne, cette distance serait plus coûteuse en temps de calcul.

## DEFINITION DE LA FONCTION D'ACTIVITE A

La mesure d'activité d'une trajectoire intègre le nombre d'alarmes trouvées sur cette trajectoire. Cette intégration peut être réalisée

- soit sur toutes les images jusqu'à l'image en cours, (par exemple au moyen d'un filtre du premier ordre, filtre linéaire récursif,
- soit sur un nombre limité d'images au moyen d'un filtre linéaire non récursif.

La seconde solution est choisie (nombre limité d'images).
L'activité A(h) est simplement définie comme le nombre exact d'alarmes trouvées sur la trajectoire durant les dernières K images.
Ou dit autrement : l'activité A(h) est le nombre exact d'appareillements effectués sur une trajectoire donnée pendant K images.
Un mot binaire B(h) de K digits est nécessaire pour réaliser cette opération. Il va garder la trace du passé pour calculer la mesure d'activité.
Les fonctions de mise à jour More ( ) et Less ( ) réalisent les glissements binaires nécessaires sur B(h) et le comptage digital.

## DEFINITION DE LA MESURE DE CONFIANCE M

Dans le pire des cas, le système doit être capable de suivre la trace d'une alarme sous les conditions caractéristiques suivantes :

- la cible est faiblement contrastée et le fond est très bruité.

    Exemple : Taux de détection 80 %, avec 50 % de fausses-alarmes par image.

- la cible est un peu plus grande que prévu, et l'enregistrement ne fonction pas bien, ce qui correspond à une faible précision sur le centre de la cible (par exemple à des erreurs de 1 ou 2 pixels par image).
- la cible peut être très lente (par exemple 1 pixel par image)
- la cible peut avoir des mouvements irréguliers ou difficiles comme par exemple des demi-tours (trajectoires d'hélicoptères).

En pareille circonstance, il est difficile d'utiliser un critère de régularité de trajectoire. De plus, il faut considérer 2 échelles de temps.
    Exemple : Lorsque l'on observe sur une petite échelle de temps, une cible se déplaçant sur une trajectoire régulière peut être identifiée en tant que cible sans difficulté, alors que si elle fait demi-tour, elle se comporte comme une fausse alarme persistante. Elle est considérée comme une cible erratique. On devra donc l'observer sur une échelle de temps plus grande pour pouvoir l'identifier en tant que cible. Finalement, comme à la fois des cibles de vitesses différentes peuvent être présentes dans la scène en même temps, la mesure de confiance ne doit pas dépendre de la vitesse des cibles.

D'une façon générale, on peut avoir des trajectoires non lisses, donc difficilement prédictibles. On cherche à savoir si, en moyenne, on se déplace de manière efficace. On définit donc un critère d'efficacité. Nous proposons une mesure de confiance basée sur l'efficacité du déplacement des cibles. Par exemple le rapport après K images :

Distance à vol d'oiseau $L_1$/distance effectivement parcourue $L_2$.

Pour être plus robuste, on regarde séparément les déplacements en X et les déplacements en Y. On analyse si on est efficace au moins en X, ou au moins en Y.

L'efficacité maximale selon les 2 axes de l'image est alors considérée. De plus, les déplacements à vol d'oiseau et les distances réellement parcourues ne peuvent pas être exactement calculées sur K images. C'est pourquoi on utilise, pour éviter de calculer des sommes, opération très gourmande en place mémoire, des filtres récursifs du 1er ordre ayant un coefficient $\alpha$ lié à une première échelle de temps. Après avoir réalisé la mesure sur une petite échelle de temps, on cherche à intégrer cette mesure sur une échelle de temps plus grande afin de pénaliser les cibles immobiles. On intègre alors la mesure par un second filtre, de coefficient $\beta$, fournissant un résultat sur une échelle de temps plus importante.

Un tel système de mesure de l'efficacité de mouvement est décrit dans la demande de brevet français déposée sous le N° 90 13 442 (publié le 30 avril 1992 sous le N° FR-A-2 668 591) et est particulièrement bien adapté à la mise en oeuvre de la mesure M du présent procédé.

Le procédé selon l'invention présente l'avantage de ne conserver qu'un nombre restreint de trajectoires, évitant ainsi l'explosion combinatoire. La limitation du nombre des trajectoires est obtenue d'une part en se fixant une distance de voisinage d0 appropriée et d'autre part en détruisant les trajectoires dont la mesure d'activité est inférieure à un seuil approprié.

Notamment, le protocole de traitement des intersections est particulièrement simple, puisqu'il revient à considérer l'intersection comme une alarme isolée, dont partent des nouvelles trajectoires.

Du fait que dans l'étape de détection on ne cherche à visualiser que :

- les alarmes dont la mesure de confiance est forte

ou

- les alarmes dont le compteur est supérieur à zéro, il en résulte que l'on se limite à visualiser les trajectoires fortes, ou bien les trajectoires qui proviennent d'une intersection.

Ce protocole permet de ne pas multiplier les trajectoires potentielles. En effet, si deux trajectoires sont initialisées à partir d'une seule alarme, elles divergent rapidement et ont leur propre histoire.

Le procédé selon l'invention peut être implémenté de façon simple par un circuit intégré programmable, comprenant les fonctions et les boucles.

## Revendications

1. Procédé de réalisation d'un filtre de mouvement pour la construction de trajectoires de cibles ponctuelles en mouvement lent appareillées dans une séquence d'images binaires recalées, incluant l'extraction de données constituant une première histoire [Hist(n-1)] formée des coordonnées des têtes (hj) de trajectoires déjà construites et des coordonnées de cibles potentiellement appareillables à des trajectoires, appelées alarmes (Ci),
ce procédé étant caractérisé en ce qu'il comprend des étapes de :

I) initialisation, incluant les définitions d'un voisinage ($d_0$) de rayon au moins égal au déplacement maximal des cibles entre deux instants, centré sur chaque alarme (Ci), et d'un critère de confiance (M) basé sur des mesures de distances parcourues par les cibles indépendamment de leur vitesse, avec un minimum admissible appelé seuil de confiance ($M_0$),

II) construction d'une seconde histoire (Histn) à un second instant (n), incluant la détermination de têtes de trajectoire (hj) appelées voisins, et de têtes de trajectoires (hj) isolées, qui sont respectivement dans un, et hors de tout, voisinage ($d_0$) d'alarme (Ci), et la mise en oeuvre de deux boucles avec :

II.a) dans une première boucle, la copie directe (hi') des alarmes (Ci) dans la seconde histoire (Histn), et la détection desdites copies directes comme nouvelles têtes de trajectoire (hi'), soit avec appareillement à un voisin s'il s'en trouve dans le voisinage de l'alarme et prolongation de la trajectoire correspondante lorsque le critère de confiance [M(hi')] appliqué à ladite copie directe appareillée est satisfait, soit avec initialisation d'une trajectoire à partir d'une copie directe sans voisin,

II.b) dans une seconde boucle, la copie directe (hi') de têtes de trajectoire isolées et la détection desdites copies directes comme nouvelles têtes de trajectoires avec maintien d'une trajectoire lorsque le critère de confiance [M(hi')] appliqué à ladite copie directe correspondante est satisfait.

2. Procédé selon la revendication 1, caractérisé en ce que :

l'étape d'initialisation inclut en outre la définition d'un critère d'activité (A) qui est une fonction du nombre de fois où une cible a été associée à une trajectoire, avec un minimum admissible appelé seuil de mort ($A_0$), et l'étape de construction de la seconde histoire (Histn) inclut en premier une sous-étape d'évaluation du critère d'activité [A(hj)] appliqué à chaque tête de trajectoire (hj), et l'élimination des têtes de trajectoires ayant une activité inférieure au seuil de mort (Ao).

3. Procédé selon la revendication 2, caractérisé en ce que dans l'étape de construction de la seconde histoire (Histn) à l'instant n, la première boucle comprend le traitement de 3 cas :

a) le traitement d'un premier cas où, dans le voisinage ($d_0$) d'une alarme (Ci), il n'y a aucun voisin (hj) relatif à une trajectoire dans la première histoire [Hist(n-1)], et qui consiste à initialiser dans la seconde histoire (Histn) une nouvelle trajectoire à partir de la copie directe (hi') de l'alarme (Ci) ;
b) le traitement d' un second cas où, dans le voisinage d'une alarme (Ci), il y a un seul voisin (hj) relatif à une trajectoire dans la première histoire [Hist(n-1)], et qui consiste à prolonger cette trajectoire en s'appuyant sur la copie directe (hi') de l'alarme (Ci) ;
c) le traitement d'un troisième cas où dans le voisinage d'une alarme (Ci), il y a plusieurs voisins (hj) relatifs à des trajectoires valides de la première histoire [Hist(n-1)], et qui consiste à décréter une "intersection", le point d'intersection étant la copie directe (hi') de l'alarme (Ci), et à initialiser dans la seconde histoire (Histn) de nouvelles trajectoires s'appuyant sur la copie directe (hi') de l'alarme (Ci), en oubliant le passé .

4. Procédé selon la revendication 3, caractérisé en ce que, dans l'étape de construction de la seconde histoire (Histn) à l'instant n, la seconde boucle comprend le traitement du cas où dans la première histoire [Hist(n-1)] on trouve une tête de trajectoire (hj) isolée, c'est-à-dire non situé dans un voisinage d'une alarme, et qui consiste, selon le degré d'activité de cet élément, soit à en faire la copie directe dans la seconde histoire (Histn), soit à l'éliminer de la seconde histoire (Histn) .

5. Procédé selon la revendication 4, caractérisé en ce que l'étape d'initialisation inclut en outre la définition d'un compteur (T) pour effectuer des comptes à rebours entre une valeur de départ (START) supérieure à zéro et la valeur zéro, qui est allumé à sa valeur de départ chaque fois qu'une intersection est détectée.

6. Procédé selon l'une des revendications 4 ou 5, caractérisé en ce que pour traiter les 3 cas, la première boucle comprend :

une première sous-boucle pour affecter les voisins (hj) actifs à un registre de travail h,
une seconde sous-boucle pour effectuer la mise à jour des mesures d'activité (A), de confiance (M) et du compteur à rebours (T).

7. Procédé selon la revendication 6, caractérisé en ce que dans la première sous-boucle,

dans le premier cas où une alarme (Ci) n'a pas de voisin, on ne fait rien ;
dans le second cas où une alarme (Ci) a un seul voisin (hj), on affecte ce voisin à un registre de travail (h) :

$$hj = h$$

et on met le compteur à rebours (T) à zéro :

$$T(hi') = 0$$

dans le troisième cas où une alarme (Ci) a plusieurs voisins (hj), on affecte à un registre de travail (h), chacun des voisins (hj) dont l'activité est supérieure au seuil d'activité ($A_0$), et s'il y a au moins 2 voisins ($hj_1$,

$hj_2$), dans ce cas, on allume le compteur à rebours (T) tel que : Si

$$A(hj_1) > A(hj_2) > A_0$$

Alors

$$T(hi') = START,$$

on a alors détecté une intersection et on met les mesures de confiance à leur valeur minimale telle que :

$$M(hi') = M_0 ;$$

et s'il n'y a qu'un seul voisin (hj) répondant au critère d'activité, on effectue le traitement comme dans le second cas ;
et caractérisé en ce que dans la seconde sous-boucle :
les mesures sont mises à jour à zéro telles que :

$$A(hi') = A_0$$

$$M(hi') = M_0$$

$$T(hi') = 0$$

en sorte qu'on a initialisé une nouvelle trajectoire s'appuyant sur la copie directe de l'alarme, dans la seconde histoire (Histn) et que :
les mesures sont mises à jour en augmentant l'activité de l'élément correspondant à l'alarme, dans la seconde histoire (Hist n), et en décrémentant d'une unité le compteur à rebours, tel que :

$$A(hi') = More\ [A(hj)]$$

$$M(hi') = R[M(hj),\ hj\ hi']$$

$$T(hi') = T(hj) - 1$$

relations dans lesquelles la fonction (More) appliquée au critère d'activité [A(hj)] rend la copie directe plus active, la fonction R est une fonction de deux variables qui sont le critère de confiance [M(hj)] et un vecteur (hj hi') reliant le voisin (hj) de la première histoire [Hist(n-1)] à sa copie directe (hi') dans la seconde histoire (Histn).

8. Procédé selon l'une des revendications 5 à 7, caractérisé en ce que la seconde boucle comprend :

une première sous-boucle pour mettre à jour l'activité des têtes de trajectoire (hj) de la première histoire [Hist(n-1)] que l'on ne peut appareiller à aucune alarme du fait que :

$$la\ distance\ d(Ci,\ hj) > d_0$$

la mise à jour de l'activité étant alors faite en révisant cette activité (A) à la baisse par une fonction (Less) appliquée à la mesure d'activité de cette tête de trajectoire dans la première histoire, telle que :

$$A(hj) = Less[A(hj)]$$

une seconde sous-boucle qui s'applique au cas où, à l'issue de la première sous-boucle, l'activité de ladite tête de trajectoire est encore supérieure au seuil de mort ($A_0$), et dans laquelle on réalise une copie directe de la tête de trajectoire (hj) en question dans la seconde histoire (Histn) et on met à jour la mesure de confiance (M) par la fonction dans laquelle le vecteur (hj hi') est le vecteur nul correspondant au fait qu'il n'y a pas eu de mouvement entre la première et la seconde histoires [Hist(n-1), Histn)], tel que hi' = hj

9. Procédé selon l'une des revendications 6 à 8, caractérisé en ce que dans l'étape de détection des cibles dans la seconde histoire, à l'instant n, on réalise la détection pour chaque copie directe (hi)' de ladite seconde histoire (Hist n), et on sélectionne chaque copie directe (hi') comme nouvelle tête de trajectoire, toutes les fois que ou bien

$$M(hi') > M_0 \text{ seuil de confiance}$$

ou bien

$$T(hi') > 0,$$

c'est-à-dire ou bien si une trajectoire est fiable, ou bien si une intersection vient d'être détectée.

10. Procédé selon l'une des revendications 2 à 9, caractérisé en ce que la distance ($d_0$) qui détermine l'étendue du voisinage d'une cible est un multiple du déplacement maximal entre 2 images, entre le premier et le second instants (n-1, n), et en ce que la distance (d) entre deux éléments est la distance dite "du jeu d'échec".

11. Procédé selon l'une des revendications 5 à 10, caractérisé en ce que le critère d'activité (A) est définie comme le nombre exact d'alarmes trouvées sur une trajectoire donnée, pendant les K dernière images, où K est un nombre entier fini.

12. Procédé selon l'une des revendications 5 à 11, caractérisé en ce que le critère de confiance (M) est fondée sur l'efficacité de déplacement des cibles.

## Patentansprüche

1. Verfahren zur Realisierung eines Bewegungsfilters zur Konstruktion von Wegstrecken von in einer geglätteten binären Bildsequenz zugeordneten punktfömigen Zielobjekten mit langsamer Bewegung, das die Extraktion von Daten einschließt, die eine erste Geschichte [Hist(n-1)] bilden, die aus den Koordinaten der bereits erstellten Wegstreckenköpfe (hj) und den Koordinaten von Zielobjekten gebildet wird, die potentiell zu Wegstrecken zugeordnet werden können, die als Alarm (Ci) bezeichnet werden, dadurch gekennzeichnet, daß es folgende Schritte umfaßt:

I) Initialisierung, einschließlich der Definition einer Nachbarschaft ($d_0$) mit einem Radius, der wenigstens gleich der maximalen Ortsveränderung der Zielobjekte zwischen zwei Zeitpunkten ist, zentriert auf jeden Alarm (Ci), und der Definition eines Verläßlichkeitskriteriums (M), das auf den Messungen der Distanzen basiert, die von den Zielobjekten unabhängig von deren Geschwindigkeiten durchlaufen worden sind, mit einem als Verläßlichkeitsschwelle (M) bezeichneten zulässigen Minimum,
II) Konstruktion einer zweiten Geschichte (Histn) zu einem zweiten Zeitpunkt (n), einschließlich der Bestimmung von sogenannten benachbarten Wegstreckenköpfen (hj) und isolierten Wegstreckenköpfen (hj), die sich in einer bzw. außerhalb jeglicher Nachbarschaft (d0) eines Alarms (Ci) befinden, und der Ausführung von zwei Schleifen mit:

II.a) in einer ersten Schleife: der direkten Kopie (hi') der Alarmmeldungen (Ci) in der zweiten Geschichte (Histn) und der Detektion der genannten direkten Kopien als neuen Wegstreckenköpfen (hi'), entweder mit Zuordnung zu einem Nachbarn, wenn er sich in der Nachbarschaft der Alarmmeldung befindet, und Verlängerung der entsprechenden Wegstrecke, wenn das auf die direkte zugeordnete Kopie angewendete Verläßlichkeitskriterium [M(hi')] erfüllt wird, oder mit Initialisierung einer Wegstrecke ausgehend von einer direkten Kopie ohne Nachbarn,

II.b) in einer zweiten Schleife: der direkten Kopie (hi') von isolierten Wegstreckenköpfen und der Detektion der genannten direkten Kopien als neuen Wegstreckenköpfen unter Beibehaltung einer Wegstrecke, wenn das auf die entsprechende genannte direkte Kopie angewendete Verläßlichkeitskriterium [M(hi')] erfüllt wird.

2.  Verfahren nach Anspruch 1, <u>dadurch gekennzeichnet,</u> daß

der Initialisierungsschritt außerdem die Definition eines Aktivitätskriteriums (A) einschließt, das eine Funktion der Anzahl von Malen ist, die ein Zielobjekt einer Wegstrecke zugewiesen worden ist, mit einem zulässigen Minimum, das Eliminierungsschwelle (A0) genannt wird, und der Konstruktionsschritt der zweiten Geschichte (Histn) zuerst einen Teilschritt zur Auswertung des Aktivitätskriteriums [A(hj)] einschließt, das auf jeden Wegstreckenkopf (hj) angewendet wird, und wobei die Wegstreckenköpfe eine Aktivität unterhalb der Eliminierungsschwelle (A0) aufweisen.

3.  Verfahren nach Anspruch 2, <u>dadurch gekennzeichnet,</u> daß im Schritt zur Konstruktion der zweiten Geschichte (Histn) zum Zeitpunkt n die erste Schleife die Verarbeitung von 3 Fällen umfaßt:

a) die Verarbeitung eines ersten Falls, bei dem es in der Nachbarschaft (do) eines Alarms (Ci) keinen zu einer Wegstrecke in der ersten Geschichte [Hist(n-1) gehörenden Nachbarn (hj) gibt, und die darin besteht, in der zweiten Geschichte (Histn) eine neue Wegstrecke ausgehend von der direkten Kopie (hi') des Alarms (Ci) zu initialisieren;

b) die Verarbeitung eines zweiten Falls, bei dem es in der Nachbarschaft eines Alarms (Ci) einen einzigen zu einer Wegstrecke in der ersten Geschichte [Hist(n-1)] gehörenden Nachbarn (hj) gibt, und die darin besteht, diese Wegstrecke zu verlängern, indem man sich auf die direkte Kopie (hi') des Alarms (Ci) stützt;

c) die Verarbeitung eines dritten Falls, bei dem es in der Nachbarschaft eines Alarms (Ci) mehrere zu gültigen Wegstrecken in einer ersten Geschichte [Hist(n-1)] gehörende Nachbarn (hj) gibt, und die darin besteht, eine "Überschneidung" festzustellen, wobei der Schnittpunkt die direkte Kopie (hi') des Alarms (Ci) ist, und in der zweiten Geschichte (Histn) neue Wegstrecken zu initialisieren, die sich auf die direkte Kopie (hi') des Alarms stützen, und dabei die Vergangenheit unberücksichtigt zu lassen.

4.  Verfahren nach Anspruch 3, <u>dadurch gekennzeichnet,</u> daß in dem Schritt zur Konstruktion der zweiten Geschichte (Histn) zum Zeitpunkt n die zweite Schleife die Verarbeitung des Falles umfaßt, bei dem man in der ersten Geschichte [Hist(n-1)] einen isolierten, d.h. sich nicht in der Nachbarschaft eines Alarms befindenden Wegstreckenkopf (hj) vorfindet, und die darin besteht, je nach dem Aktivitätsgrad dieses Elements entweder dessen direkte Kopie in der zweiten Geschichte (Histn) zu bilden oder es aus der zweiten Geschichte (Histn) zu eliminieren.

5.  Verfahren nach Anspruch 4, <u>dadurch gekennzeichnet,</u> daß der Initialisierungsschritt außerdem die Definition eines Zählers (T) einschließt, um Rückwärtszählungen zwischen einem Anfangswert (START) größer null und dem Wert null vorzunehmen, und der jedesmal mit seinem Anfangswert aktiviert wird, wenn eine Überschneidung detektiert wird.

6.  Verfahren nach einem der Ansprüche 4 oder 5, <u>dadurch gekennzeichnet,</u> daß die erste Schleife zur Bearbeitung der drei Fälle folgendes umfaßt:

eine erste Teilschleife, um die aktiven Nachbarn (hj) einem Arbeitsregister h zuzuweisen, eine zweite Teilschleife, um die Aktualisierung der Aktivitätsmessungen (A), der Verläßlichkeitsmessungen (M) und des Rückwärtszählers (T) vorzunehmen.

7.  Verfahren nach Anspruch 6, <u>dadurch gekennzeichnet,</u> daß in der ersten Teilschleife

in dem ersten Fall, bei dem ein Alarm (Ci) keinen Nachbarn hat, nichts unternommen wird, in dem zweiten Fall, bei dem ein Alarm (Ci) einen einzigen Nachbarn (hj) hat, dieser Nachbar einem Arbeitsregister (h) zugewiesen wird:

$$hj = h$$

und der Rückwärtszähler (T) auf null gesetzt wird:

$$T(hi') = 0$$

in dem dritten Fall, bei dem ein Alarm (Ci) mehrere Nachbarn (hj) hat, einem Arbeitsregister (h) jeder der Nachbarn (hj) zugewiesen wird, dessen Aktivität über der Aktivitätsschwelle ($A_0$) liegt, und daß, falls es in diesem Fall wenigstens 2 Nachbarn ($hj_1$, $hj_2$) gibt, der Rückwärtszähler (T) aktiviert wird, so daß: wenn

$$A(hj_1) > A(hj_2) > A_0$$

dann

$$T(hi') = START,$$

und man dann eine Überschneidung detektiert hat und die Verlässigkeitsmessungen auf ihren Minimalwert setzt, so daß:

$$M(hi') = M_0;$$

und daß, wenn es nur einen einzigen Nachbarn (hj) gibt, der das Aktivitätskriterium erfüllt, die Verarbeitung wie in dem zweiten Fall durchgeführt wird,
und dadurch gekennzeichnet, daß in der zweiten Teilschleife
die Messungen mit null aktualisiert werden, so daß:

$$A(hi') = A_0$$

$$M(hi') = M_0$$

$$T(hi') = 0$$

so daß man eine Wegstrecke initialisiert hat, die sich auf die direkte Kopie des Alarms in der zweiten Geschichte (Histn) stützt, und daß:
die Messungen aktualisiert werden, indem man die Aktivität des dem Alarm in der zweiten Geschichte (Histn) entsprechenden Elements erhöht und den Rückwärtszähler um eine Einheit dekrementiert, so daß:

$$A(hi') = More(A(h))$$

$$M(hi') = R[M(h), h\ hi']$$

$$T(hi') = T(h) -1$$

wobei in diesen Beziehungen die auf das Aktivitätskriterium [A(hj)] angewendete Funktion (More) die aktivere direkte Kopie liefert, die Funktion R eine Funktion mit zwei Variablen ist, nämlich dem Verläßlichkeitskriterium [M(hj)] und einem Vektor (hj hi'), der den Nachbarn (hj) der ersten Geschichte [Hist(n-1)] mit seiner direkten Kopie (hi') in der zweiten Geschichte (Histn) verbindet.

8. Verfahren nach einem der Ansprüche 5 bis 7, dadurch gekennzeichnet, daß die zweite Schleife folgendes umfaßt:

eine erste Teilschleife, um die Aktivität der Wegstreckenköpfe (hj) der ersten Geschichte [Hist(n-1)], zu aktualisieren, die zu keinem Alarm zugeordnet werden können, da:

$$\text{die Distanz } d(Ci,hj) > d_0$$

wobei dann die Aktualisierung der Aktivität erfolgt, indem diese Aktivität durch eine auf die Aktivitätsmessung dieses Wegstreckenkopfes in der ersten Geschichte angewendete Funktion (Less) nach unten korrigiert wird, so daß:

$$A(hj) = Less[A(hj)]$$

eine zweite Teilschleife, die auf den Fall angewendet wird, bei dem als Ergebnis der ersten Teilschleife die Aktivität des genannten Wegstreckenkopfes immer noch über der Eliminierungsschwelle ($A_0$) liegt, und in der man eine direkte Kopie des betreffenden Wegstreckenkopfes (hj) in der zweiten Geschichte (Histn) bildet und die Verläßlichkeitsmessung (M) durch die Funktion aktualisiert, in der der der Vektor (hj hi') der Nullvektor ist, der der Tatsache entspricht, daß zwischen der ersten und der zweiten Geschichte [Hist(n-1), Histn] keine Bewegung stattgefunden hat, so daß hi' = hj.

9. Verfahren nach einem der Ansprüche 6 bis 8, dadurch gekennzeichnet, daß in dem Detektionsschritt für die Zielobjekte in der zweiten Geschichte zum Zeitpunkt n, die Detektion für jede direkte Kopie (hi') der genannten zweiten Geschichte (Histn) durchgeführt wird und jede direkte Kopie (hi') als neuer Wegstreckenkopf selektiert wird, jedesmal wenn

entweder

$$M(hi') > M_0 \text{ Verläßlichkeitsschwelle}$$

oder

$$T(hi') > 0,$$

d.h. wenn eine Wegstrecke verläßlich ist oder gerade eine Überschneidung detektiert worden ist.

10. Verfahren nach einem der Ansprüche 2 bis 9, dadurch gekennzeichnet, daß die Distanz ($d_0$), die das Ausmaß der Nachbarschaft eines Zielobjekts festlegt, ein Vielfaches der maximalen Ortsveränderung zwischen 2 Bildern zwischen dem ersten und zweiten Zeitpunkt (n-1, n) und die Distanz (d) zwischen zwei Elementen die sogenannte "Schachspiel"-Distanz ist.

11. Verfahren nach einem der Ansprüche 5 bis 10, dadurch gekennzeichnet, daß das Aktivitätskriterium als die genaue Anzahl von auf einer gegebenen Wegstrecke gefundenen Alarmmeldungen während der K letzten Bilder ist, wobei K eine endliche ganze Zahl ist.

12. Verfahren nach einem der Ansprüche 5 bis 11, dadurch gekennzeichnet, daß das Verläßlichkeitskriterium (M) auf der Ortsveränderungseffizienz der Zielobjekte beruht.

## Claims

1. A method of forming a motion filter for the construction of trajectories of point-shaped, slowly moving, matched targets in a sequence of readjusted, binary images, including the extraction of data constituting a first history [Hist (n-1)] formed by coordinates of start points (hj) of already constructed trajectories and coordinates of targets that could potentially be matched with trajectories and are called alarms (ci), which method is characterized in that it comprises the steps of:

I) initialization, including the definition of a neighbourhood ($d_o$) having radius at least equal to the maximum displacement of targets between two instants, centered on each alarm (Ci), and of a reliability criterion (M) based on measurements of distances travelled by the targets, independently of their velocity, with a permissible minimum which is called the reliability threshold (M$_o$),

II) construction of a second history (Histn) at a second instant (n), including the determination of start points (hj) of trajectories, called neighbours, and start points of isolated trajectories (hj) which are situated in an alarm (Ci) neighbourhood (d$_o$) and outside an alarm neighbourhood, respectively, and the implementation of two loops, where:

II.a) in a first loop alarms (Ci) are copied (hi') directly in the second history (Histn) and said direct copies are detected as new trajectory start points (hi'), either with matching with a neighbour if it is situated in the neighbourhood of the alarm and prolongation of the corresponding trajectory when the reliability criterion M(hi') applied to said matched direct copy is satisfied, or with initialization of a trajectory from a direct copy without neighbour,

II.b) in a second loop start points of isolated trajectories are copied (hi') directly and said direct copies are detected as new trajectory start points, a trajectory being preserved when the reliability criterion [M(hi')] applied to said corresponding direct copy is satisfied.

2. A method as claimed in Claim 1, characterized in that:

the initialization step also includes the definition of an activity criterion (A) which is a function of the number of times that a target has been associated with a trajectory, involving a permissible minimum called a destruction threshold (A$_o$),

and the step for the construction of the second history (Histn) includes firstly a sub-step for evaluating the activity criterion [A(hj)] applied to each trajectory start point (hj) and for eliminating start points of trajectories with an activity below the destruction threshold (A$_o$).

3. A method as claimed in Claim 2, characterized in that in the step for the construction of the second history (Histn) at the instant n the first loop deals with three cases:

a) the treatment of a first case where the neighbourhood (d$_0$) of an alarm (Ci) does not contain any neighbour (hj) relating to a trajectory in the first history [Hist(n-1)] and which consists of initializing in the second history (Histn) a new trajectory from the direct copy (hi') of the alarm (Ci);

b) the treatment of a second case where the neighbourhood of an alarm (Ci) contains a single neighbour (hj) relating to a trajectory in the first history [Hist(n-1)] and which consists in prolonging this trajectory on the basis of the direct copy (hi') of the alarm (Ci);

c) the treatment of a third case where the neighbourhood of an alarm (Ci) contains several neighbours (hj) relating to valid trajectories of the first history [Hist(n-10] and which consists in declaring an "intersection", the point of intersection being the direct copy (hi') of the alarm (Ci), and of initializing in the second history (Histn) new trajectories on the basis of the direct copy (hi') of the alarm (Ci) while disregarding the past.

4. A method as claimed in Claim 3, characterized in that in the step for constructing the second history (Histn) at the instant n the second loop comprises the treatment of the case where in the first history [Hist(n-1)] there is found a start point (hj) of an isolated trajectory, that is to say a trajectory not situated in the neighbourhood of an alarm, and which consists, depending on the degree of activity of this element, of either making the direct copy in the second history (Histn) or of eliminating it from the second history (Histn).

5. A method as claimed in Claim 4, characterized in that the initialization step also includes the definition of a counter (T) for counting down between a start value (START) larger than zero and the value zero, which counter is activated at its start value whenever an intersection is detected.

6. A method as claimed in one of the Claims 4 or 5, characterized in that for the treatment of the three cases the first loop comprises:

a first sub-loop for assigning the active neighbours (hj) to a working register h,
a second sub-loop for updating measurements of activity (A), reliability (M) and the down counter (T).

7. A method as claimed in Claim 6, characterized in that in the first sub-loop,

in the first case, where an alarm (Ci) has no neighbour, nothing is done;
in the second case, where an alarm (Ci) has a single neighbour (hj), this neighbour (hj) is assigned to a working register (h):

$$hj = h$$

and the down counter (T) is set to zero:

$$T(hi') = 0;$$

in the third case, where an alarm (Ci) has several neighbours (hj), each of the neighbours (hj) whose activity exceeds the activity threshold $(A_o)$ is assigned to a working register (h) and, if there are at least two neighbours $(hj_1, hj_2)$ in this case, the down counter (T) is activated so that:
if

$$a(hj_1) > a(hj_2) > A_0$$

then

$$T(hi') = START,$$

an intersection has thus been detected and the reliability measurements are set to their minimum value so that:

$$M(hi') = M_0;$$

and, if not a single neighbour (hj) satisfies the activity criterion, the treatment is performed as in the second case;
and characterized in that in the second sub-loop;
the measurements are updated to zero so that:

$$A(hi') = A_0$$

$$M(hi') = M_0$$

$$T(hi') = ()$$

so that a new trajectory is initialized on the basis of the direct copy of the alarm in the second history (Histn), and that:
the measurements are updated by incrementing the activity of the element corresponding to the alarm in the second history (Histn), and b y decrementing the down counter by one unit so that:

$$A(hi') = More\ [A(hj)]$$

$$M(hi') = R[M(hj)\ hj\ hi']$$

$$T(hi') = T(hj)-1$$

in which relations the function (More) applied to the activity criterion [a(hj)] renders the direct copy more active, the function R is a function of two variables which are the reliability criterion [M(hj)] and a vector (hj hi') linking the neighbour (hj) of the first history [Hist(n-1)] to its direct copy (hi') in the second history (Histn).

8. A method as claimed in one of the Claims 5 to 7, characterized in that the second loop comprises:

a first sub-loop for updating the activity of trajectory start points (hj) of the first history [Hist(n-1)] that cannot be matched with any alarm because of the fact that:

$$\text{the distance } d(Ci, hj) > d_o$$

the updating of the activity then being performed by adjusting said activity (A) downwards by a function (Less) applied to the activity measurement of this trajectory in the first history, so that:

$$A(hj) = \text{Less } [A(hj)];$$

a second sub-loop which applies to the case where at the end of the first subloop the activity of said trajectory start point still exceeds the destruction threshold ($A_o$) and where a direct copy is made of the trajectory start point (hj) in question in the second history (Histn) and the reliability measurement (M) is updated by the function in which the vector (hj hi') is the vector zero corresponding to the fact that there has not been movement between the first and the second history [Hist(n-1), Histn)], so that hi' = hj.

9. A method as claimed in one of the Claims 6 to 8, characterized in that in the step for the detection of targets in the second history, at the instant n, detection is performed for each direct copy (hi') of said second history (Histn) and each direct copy (hi') is selected as a new trajectory start point each time that
either

$$M(hi') > M_o, \text{ reliability threshold,}$$

or

$$T(hi') > o,$$

that is to say either if a trajectory is reliable or an intersection has just been detected.

10. A method as claimed in one of the Claims 2 to 9, characterized in that the distance ($d_o$) determining the magnitude of the neighbourhood of a target is a multiple of the maximum displacement between two images, between the first instant (n-1) and the second instant (n), and that the distance (d) between two elements is the so-called "chess" distance.

11. A method as claimed in one of the Claims 5 to 10, characterized in that the activity criterion (A) is defined as the exact number of alarms found on a given trajectory during the last K images, where K is a finite integer.

12. A method as claimed in one of the Claims 5 to 11, characterized in that the reliability criterion (M) is based on the efficiency of displacement of targets.